# EUROPÄISCHE PATENTSCHRIFT

(11) **EP 4 336 285 B1**
(45) Veröffentlichungstag und Bekanntmachung des Hinweises auf die Patenterteilung: **14.01.2026**
(21) Anmeldenummer: 23195067.6
(22) Anmeldetag: 04.09.2023
(51) Int. Cl.: G05B 19/4093, G05B 19/418

(54) **LEBENSMITTELVERARBEITUNGSMASCHINE UND VERFAHREN ZUM EINSCHRÄNKEN VON DURCH EINEN BEDIENER AN EINER LEBENSMITTELVERARBEITUNGSMASCHINE AKTIVIERBAREN PROZESSEN**
FOOD PROCESSING MACHINE AND METHOD FOR RESTRICTING PROCESSES ACTIVATABLE BY AN OPERATOR ON A FOOD PROCESSING MACHINE
MACHINE DE TRAITEMENT D'ALIMENTS ET PROCÉDÉ POUR LIMITER DES PROCESSUS ACTIVABLES PAR UN OPÉRATEUR DANS UNE MACHINE DE TRAITEMENT D'ALIMENTS

(30) Priorität: 09.09.2022 DE 102022122909
(43) Veröffentlichungstag der Anmeldung: 13.03.2024
(73) Patentinhaber: MULTIVAC Sepp Haggenmüller SE & Co. KG, 87787 Wolfertschwenden (DE)
(72) Erfinder: FELCH, Florian, 87477 Sulzberg (DE); MAYER, Felix, 88453 Erolzheim (DE); HEINEKE, Markus, 87545 Burgberg (DE)
(74) Vertreter: Grünecker Patent- und Rechtsanwälte PartG mbB

(56) Entgegenhaltungen:
- WO-A1-2021/160472
- DE-A1- 10 129 392

## Beschreibung

Die vorliegende Erfindung bezieht sich auf eine Lebensmittelverarbeitungsmaschine gemäß Anspruch 1 sowie auf ein Verfahren zum Einschränken von durch einen Bediener an einer Lebensmittelverarbeitungsmaschine aktivierbaren Prozessen gemäß Anspruch 11.

Tendenziell sollen Lebensmittelverarbeitungsmaschinen, insbesondere Verpackungsmaschinen, flexibel einsetzbar sein, sprich dazu in der Lage sein, verschiedene Produkte herzustellen. Aufgrund der wachsenden Fülle von Produkten kommen daher an Lebensmittelverarbeitungsmaschine immer mehr auswechselbare Werkzeuge für den Herstellungsprozess zum Einsatz. Die zunehmende Vielfalt verschiedener Werkzeugaufbauten führt dazu, dass für Bediener Einstellvorgänge immer komplexer werden, was dazu führen kann, dass Umrüstungen und ggf. diesbezüglich beim Maschinenstart eingestellte Prozessabläufe fehlerbehaftet sind. Dadurch kann es vermehrt zu Unterbrechungen des laufenden Betriebs kommen, aufgrund dessen die Herstellungskosten in die Höhe getrieben werden. Insbesondere werden die Einstellvorgänge auch deshalb immer schwieriger, da auch an kombinierten, aus mehreren zusammenarbeitenden Werkzeugteilen gebildete Werkzeugaufbauten einzelne Werkzeugteile davon austauschbar sind, um ein erweitertes Bearbeitungsspektrum zu erschließen.

DE 10 2016 125 132 A1 offenbart eine Verpackungsmaschine mit einer Busknotenanordnung. Die Busknotenanordnung ist an der Außenseite einer Arbeitsstation der Verpackungsmaschine befestigt und stellt über einen mit ihr verbundenen Kommunikationsbus Informationen über das Werkzeug der Arbeitsstation, beispielsweise eine Kennung des Werkzeugs, einer Steuerung der Verpackungsmaschine zur Verfügung. Damit ist das in der Arbeitsstation verbaute Werkzeug eindeutig identifizierbar. Außerdem kann anhand der Kennung des Werkzeugs der gesamte Betrieb der Verpackungsmaschine auf das jeweilige Werkzeug abgestimmt werden.

WO 2021/160 472 A1 offenbart eine Lebensmittelverpackungsmaschine, bei der abhängig von einer eingelesenen Werkzeugkennung eine Menge von Maschinenbetriebsparametern eingeschränkt und einem Bediener angezeigt wird.

Vor diesem Hintergrund ist es die Aufgabe der Erfindung, eine Lebensmittelverarbeitungsmaschine sowie ein Verfahren bereitzustellen, wodurch es einem Bediener vereinfacht wird, angesichts einer für ein bestimmtes Produkt speziell vorliegenden Maschinenkonfiguration mühelos den Betrieb der Lebensmittelverarbeitungsmaschine möglichst schnell auf einen optimalen Betriebspunkt einzustellen.

Diese Aufgabe wird gelöst mittels einer Lebensmittelverarbeitungsmaschine gemäß Anspruch 1 sowie mittels eines Verfahrens gemäß Anspruch 11.

Vorteilhafte Weiterbildungen der Erfindung sind durch die jeweiligen Gegenstände der Unteransprüche gegeben.

Die vorliegende Erfindung betrifft eine Lebensmittelverarbeitungsmaschine, die insbesondere in Form einer Verpackungsmaschine, beispielsweise als Tiefziehverpackungsmaschine oder als Schalenverschließmaschine, zum Herstellen einzelner Verpackungen aus einem Verpackungsmaterial konfiguriert ist. Die erfindungsgemäße Lebensmittelverarbeitungsmaschine weist mehrere Werkzeugteile, die austauschbar sind und die jeweils mindestens einen elektronischen Datenspeicher umfassen, in welchem eine Werkzeugkennung zur Identifizierung der jeweiligen Werkzeugteile gespeichert ist, sowie eine Steuereinrichtung auf, die mit den jeweiligen Datenspeichern zum Auslesen der darin gespeicherten Werkzeugkennungen verbunden ist.

Gemäß der Erfindung ist die Steuereinrichtung dazu konfiguriert ist, auf Basis mindestens einer von ihr aus dem Datenspeicher eines an der Lebensmittelverarbeitungsmaschine installierten, austauschbaren Werkzeugteils ausgelesenen Werkzeugkennung, mit diesem Werkzeugteil grundsätzlich durchführbare Prozesse, die für einen Betrieb des Werkzeugteils in Frage kommen, zu bestimmen, und ferner durch einen Vergleich dieser Prozesse mit auf Basis einer in der Lebensmittelverarbeitungsmaschine fest verbauten, für das Werkzeugteil eingesetzten Maschinenausstattung mittels der Lebensmittelverarbeitungsmaschine grundsätzlich ausführbaren Prozessen eine Schnittmenge an Detailprozessen zu bestimmen, anhand welcher das Werkzeugteil anhand der dafür vorgesehenen Maschinenausstattung steuerbar ist. Die Steuereinrichtung hält die hinsichtlich des Werkzeugteils und hinsichtlich der dafür vorliegenden Maschinenausstattung resultierende Schnittmenge an Detailprozessen als durch einen Bediener an der Steuereinrichtung an einer daran als Display ausgebildeten Eingabeeinheit auswählbare Prozesse für den Betrieb der Lebensmittelverarbeitungsmaschine bereit. Damit kann der Einstellvorgang der Lebensmittelverarbeitungsmaschine hinsichtlich des tatsächlich daran installierten, austauschbaren Werkzeugteils vereinfacht werden.

Anhand der erfindungsgemäßen Steuereinrichtung kann somit, beispielsweise bei einem Maschinenstart und/oder bei einem Umrüstvorgang der Lebensmittelverarbeitungsmaschine, zunächst festgestellt werden, welche Prozesse überhaupt anhand des installierten Werkzeugteils, das beispielsweise als Werkzeugoberteil, Werkzeugunterteil oder als daran lösbar befestigtes Modul vorliegt, möglich sind. In anderen Worten wird anhand der erfindungsgemäßen Steuereinrichtung vor dem eigentlichen Herstellungsprozess zunächst festgestellt, welche Prozesse unter Verwendung des austauschbaren Werkzeugteils durchgeführt werden können, sprich damit potentiell durchführbare Prozesse bestimmt. Bei diesen Werkzeugprozessen handelt es sich insbesondere um sensorgesteuerte Werkzeugprozesse, die mit dem Werkzeugteil durchführbar sind, wie z.B. daran gesteuerte Heizintervalle, Evakuierungsdruckverläufe, Begasungsdruckverläufe, Formprozesse, Siegelprozesse und/oder Schneidprozesse. Die durchführbaren Prozesse sind insbesondere durch speziell gesteuerte und/oder dynamisch geregelte Prozessabläufe, beispielsweise kennliniengeführte, zumindest kennliniengestützte und/oder dynamisch kaskadierte Prozessabläufe, definiert, die anhand des Werkzeugteils durchführbar sind.

Mittels der Erfindung lässt sich vor allem eine Vielzahl von Prozessen, die grundsätzlich anhand der fest verbauten Maschinenaggregate für den Betrieb der Lebensmittelverarbeitungsmaschine möglich sind, die aber nicht für den Betrieb des installierten, austauschbaren Werkzeugteils in Frage kommen, als nicht auswählbare Prozesse für den vorliegenden Maschinenaufbau identifizieren und auf einen nicht aktivierbaren Zustand setzen, damit diese von einem Bediener nicht irrtümlich bei der Einstellung der Maschine ausgewählt und mit Betriebsparametern besetzt werden können. Dies vereinfacht den Einstellvorgang und verhindert Fehleinstellungen, die zu Herstellungsverzögerungen führen können.

Die Erfindung ermöglicht es, dass sich die durch einen Bediener für einen Betrieb der Lebensmittelverarbeitungsmaschine auswählbaren Prozesse, automatisch mindestens auf Prozesse einschränken lassen, welche den tatsächlich anhand des speziell an der Maschine installierten, austauschbaren Werkzeugteils durchführbaren Prozessen entsprechen, selbst wenn die Lebensmittelverarbeitungsmaschine fest verbaute Aggregate aufweist, die in Kombination mit mindestens einem anderen, austauschbaren Werkzeugteil, das anstelle des für den Betrieb tatsächlich installierten Werkzeugteils zum Einsatz kommen kann, zusätzliche Prozesse ausführen können. Diese kombinierte werkzeug- und maschinenausstattungsbezogene, automatische Einschränkung auswählbarer Prozesse, beispielsweise auswählbarer Siegel-, Form- und/oder Vorheizprozesse, macht es dem Bediener einfach, die Maschinensteuerung für den Herstellungsprozess einzustellen.

Gemäß einer Ausführungsform der Erfindung ist die Steuereinrichtung dazu konfiguriert, durch einen Vergleich der mit den jeweiligen austauschbaren Werkzeugteilen durchführbaren Prozesse mit auf Basis einer in der Lebensmittelverarbeitungsmaschine fest verbauten, für die Werkzeugteile eingesetzten Maschinenausstattung mittels der Lebensmittelverarbeitungsmaschine grundsätzlich ausführbaren Prozessen eine Schnittmenge an Detailprozessen für den vorliegenden Maschinenaufbau zu bestimmen, anhand welcher der Betrieb der Lebensmittelverarbeitungsmaschine steuerbar ist. Somit ist es möglich, dass ein Abgleich zwischen den von mehreren austauschbaren Werkzeugteilen durchführbaren Werkzeugprozessen mit den anhand der von der Lebensmittelverarbeitungsmaschine zum Betreiben der jeweiligen Werkzeugteile eingesetzten Aggregate durchführbaren Prozesse stattfindet, woraus sich die vom Bediener auswählbaren Prozesse gleich für mehrere Werkzeugteile, d.h. noch weiter einschränken lassen. Daraus resultiert, dass für den Bediener beim Einstellen der Maschine lediglich diejenigen Prozesse noch zur Auswahl stehen, die anhand der speziellen Werkzeugkombination und des für dessen Betrieb bereitgestellten, allgemeinen Aggregateaufbaus der Lebensmittelverarbeitungsmaschine, sprich anhand dessen fest verbauter Maschinenausstattung, möglich sind. In anderen Worten kommt damit eine zunehmende Beschränkung, maximal durch die vorliegende Maschinenkonfiguration auswählbarer Detailprozesse zustande. Die vorliegende Variante vergleicht somit den Werkzeugaufbau mehrerer austauschbarer Werkzeugteile mit einer dafür bereitgestellten Maschinenausstattung, um daraus das Maximum auswählbarer Detailprozesse herauszubekommen. Dabei können selbst für eine bestimmte Werkzeugkombination, die an verschiedenen Maschinentypen einsetzbar ist, unterschiedliche Detailprozesse für den Betrieb der jeweiligen Maschinentypen in Abhängigkeit der daran verbauten Aggregate zur Auswahl stehen.

Vorzugsweise ist die Maschinenausstattung durch mindestens einen pneumatischen, elektrischen und/oder elektromagnetischen Antrieb vorgegeben. Auf Basis der Leistungsdaten solcher Antriebe lassen sich mit ihnen bestimmte Werkzeugprozesse ausführen, die zum Vergleich mit den aus dem Werkzeugaufbau möglichen Werkzeugprozessen der Steuervorrichtung vorhaltbar sind, um daraus die Schnittmenge an Detailprozessen zu bestimmen.

Eine Variante sieht vor, dass die Lebensmittelverarbeitungsmaschine mehrere in Produktionsrichtung hintereinander angeordnete Arbeitsstationen aufweist, wobei die Werkzeugteile an derselben Arbeitsstation oder an verschiedenen Arbeitsstationen installiert sind. Insbesondere können die beiden Werkzeugteile getrennt voneinander oder gemeinsam an einer Vorheizstation, Formstation, Siegelstation und/oder Schneidstation verbaut sein.

Die Steuereinrichtung kann insbesondere dazu konfiguriert sein, auf Basis mehrerer von ihr aus den jeweiligen Datenspeichern der an den verschiedenen Arbeitsstationen der Lebensmittelverarbeitungsmaschine installierten, austauschbaren Werkzeugteile ausgelesenen Werkzeugkennungen, jeweilige mit diesen Werkzeugteilen grundsätzlich durchführbare Prozesse, die für einen Betrieb der jeweiligen Werkzeugteile in Frage kommen, zu bestimmen, und ferner durch einen Vergleich dieser Prozesse mit auf Basis einer an den jeweiligen Arbeitsstationen der Lebensmittelverarbeitungsmaschine fest verbauten, daran für die jeweiligen Werkzeugteile eingesetzten Maschinenausstattung mittels der jeweiligen Arbeitsstationen grundsätzlich ausführbaren Prozessen jeweilige Schnittmengen an Detailprozessen zu bestimmen, anhand welcher die Werkzeugteile anhand der jeweiligen an den Arbeitsstationen verbauten Maschinenausstattung steuerbar sind. Die Einschränkung der durch den Bediener auswählbaren Prozesse kann damit für die jeweiligen Arbeitsstationen der Lebensmittelverarbeitungsmaschine auf einfache Weise geschehen.

Denkbar wäre es, dass die Steuereinrichtung dazu konfiguriert ist, aus einer Kombination der jeweiligen an mindestens einer Arbeitsstation installierten Werkzeugteile damit durchführbare Prozesse zu bestimmen und mit den anhand der an dieser Arbeitsstation installierten Maschinenausstattung grundsätzlich durchführbaren Prozesse zu vergleichen, um die Schnittmenge auswählbarer Detailprozesse für die jeweilige Arbeitsstation zu erhalten.

Von Vorteil ist es, wenn die Steuereinrichtung zum Aufteilen der Schnittmenge an Detailprozessen in mehrere Teilmengen von mittels der jeweiligen Arbeitsstationen durchführbaren Prozesse konfiguriert ist. Dadurch ergibt sich eine prozessbezogene Unterteilung, wodurch sich der Einstellvorgang weiter vereinfachen lässt.

Eine bevorzugte Ausführungsform sieht vor, dass die Werkzeugteile durch ein Formwerkzeugoberteil für einen Tiefziehprozess, durch ein Formwerkzeugunterteil für einen Tiefziehprozess, durch ein Siegelwerkzeugoberteil für einen Siegelprozess und/oder durch ein Siegelwerkzeugunterteil für einen Siegelprozess gebildet sind. Die maschinenseitige Ausstattung wird bei dieser Variante insbesondere durch eine funktional mit mindestens einem der Werkzeugteile verbundenen Vakuumpumpe, Begasungs- und/oder Heizeinrichtung gebildet.

Vorzugsweise weist die Lebensmittelverarbeitungsmaschine eine Benutzeroberfläche (HMI) für einen Bediener auf, beispielsweise ein Touchdisplay, anhand derer den Detailprozessen übergeordnete Basisprozesse, beispielsweise Vorheizen, Formen und/oder Siegeln, dem Bediener anzeigbar und von diesem auswählbar sind, durch deren Auswahl und in Abhängigkeit einer der Steuereinrichtung vorgehaltenen Priorisierungsreihenfolge für die Detailprozesse die Detailprozesse aktivierbar sind. Dies führt zu einer weiteren Einstellhilfe für den Bediener, da er nicht direkt auf die im Hintergrund durch die Steuereinrichtung automatisch bestimmten Detailprozesse Zugriff hat, sondern diese vornehmlich indirekt über die ihm am HMI angezeigten, übergeordneten Basisprozesse auswählen kann. Dadurch wird für den Bediener das Einstellen der Lebensmittelverarbeitungsmaschine noch einfacher.

Zweckmäßig wäre es, wenn die mit dem Datenspeicher versehenen Werkzeugteile jeweils beheizbar ausgebildet sind. An diesen Werkzeugteilen ergeben sich auf Basis der Heizintervalle temperaturbedingte Abhängigkeiten, die andere, im Anschluss an die Heizintervalle stattfindende, insbesondere diese zumindest zeitweise überlagernde, Prozessabläufe beeinflussen können, sodass eine maschinensteuerungsunterstützte automatische Einschränkung der anhand der Maschinenkonfiguration zur Verfügung stehenden (Detail-)Prozesse für den Bediener besonders hilfreich ist.

Gemäß einer vorteilhaften Variante ist vorgesehen, dass die Lebensmittelverarbeitungsmaschine mindestens eine Schnittstelle für einen Datenspeicher, beispielsweise für eine CF-Karte, vorsieht, auf welcher eine editierbare Referenztabelle potenzieller Kombinationen aus Werkzeugteilen und dafür eingesetzter Maschinenausstattung gespeichert ist. Daraus lassen sich die jeweiligen Schnittmengen an Detailprozessen auslesen, die dem Bediener zum Einstellen des Betriebs der jeweiligen Arbeitsstationen zur Auswahl stehen. Vorzugsweise sind die auf der CF-Karte gespeicherten Daten mittels der Steuereinrichtung auslesbar und für mindestens einen der zuvor beschriebenen Zwecke verwendbar.

Eine vorteilhafte Ausführungsform sieht vor, dass die Steuereinrichtung mit einer cloudbasierten Anwendung funktional verbunden ist, anhand welcher die Steuereinrichtung für den Herstellungsprozess, insbesondere die mittels der Steuereinrichtung eingeschränkten, auswählbaren Detailprozesse, mit Sollprozessparametern parametrisiert werden kann. Diese Sollprozessparameter können sich aus einem in der cloudbasierten Anwendung hinterlegten, aktualisierbaren Regelwerk ergeben. Für eine sichere Vorbelegung der Steuereinrichtung mit Sollprozessparametern aus der cloudbasierten Anwendung wäre es zweckmäßig, wenn zwischen der cloudbasierten Anwendung und der Steuereinrichtung der Lebensmittelverarbeitungsmaschine ein zumindest teilweise mittels eines asymmetrischen Verfahrens, beispielsweise mittels PGP, verschlüsselter Datentransfer stattfindet.

Gemäß einer Variante ist der Datenspeicher als RFID-Einheit konfiguriert. Jedes Werkzeugteil kann mit einer solchen RFID-Einheit ausgestattet sein. Die Lebensmittelverarbeitungsmaschine kann mit einer zentralen RFID-Leseeinheit oder mit mehreren, an den jeweiligen Arbeitsstationen montierten RFID-Leseeinheiten versehen sein.

Möglich wäre es, den Datenspeicher, insbesondere, wenn er als RFID-Einheit vorliegt, mindestens eines an der Lebensmittelverarbeitungsmaschine eingesetzten Werkzeugteils als Datenspeicher zum Sichern von tatsächlich an der Lebensmittelverarbeitungsmaschine eingesetzten, d.h. kombinierten Werkzeugaufbauten zu nutzen, beispielsweise indem für diese Werkzeugkombination eine spezielle, die einzelnen darin eingesetzten Werkzeugteile widergebende Kodierung von der Steuereinrichtung generiert und auf dem Datenspeicher mindestens eines dafür eingesetzten Werkzeugteils gespeichert wird. Damit lassen sich die zur Produktion verschiedener Produktreihen eingesetzten Werkzeugkombinationen für zukünftige, vergleichbare Projekte festhalten und können in dieser Zusammenstellung mittels eines in der Steuereinrichtung und/oder in der damit verbundenen, cloudbasierten Anwendung installierten Assistenzprogramms bei einem Umrüstvorgang dem Bediener über das HMI vorgeschlagen werden, sobald die Steuereinrichtung mindestens ein Werkzeugteil aus der gespeicherten Werkzeugkombination erkennt. Dadurch ergibt sich eine Hilfe, um an der Lebensmittelverarbeitungsmaschine die richtigen Werkzeugteile zu montieren.

Denkbar wäre es, dass die Lebensmittelverarbeitungsmaschine eine Tiefziehverpackungsmaschine, eine Schalenverschließmaschine, eine Schlauchbeutelmaschine, ein Etikettierer, eine Aufschneidemaschine oder eine Teigverarbeitungsmaschine ist.

Gemäß einer Variante liegt eine Verpackungslinie vor, die in Produktionsrichtung mindestens zwei erfindungsgemäße Lebensmittelverarbeitungsmaschinen aufweist. Hier könnten die jeweiligen Steuereinrichtungen der entlang der Verpackungslinie eingesetzten Lebensmittelverarbeitungsmaschinen vernetzt sein, wobei die jeweiligen Steuereinrichtungen dazu konfiguriert sind, auf Basis einer Kombination von auslesbaren Werkzeugkennungen von mindestens zwei, an den Lebensmittelverarbeitungsmaschinen installierten Werkzeugteilen mit diesen Werkzeugteilen durchführbare Prozesse zu bestimmen, die für einen gemeinsamen Betrieb der Lebensmittelverarbeitungsmaschinen, insbesondere für den Betrieb mindestens einer an ihnen eingesetzten, ggf. die beiden Werkzeugteile aufweisenden Arbeitsstation, in Frage kommen. Insbesondere wird zur Bestimmung der durchführbaren Prozesse jeweils von beiden Lebensmittelverarbeitungsmaschinen mindestens ein daran eingesetztes Werkzeugteil berücksichtigt.

Ferner bezieht sich die Erfindung auf ein Verfahren zum Einschränken von durch einen Bediener an einer Lebensmittelverarbeitungsmaschine aktivierbaren Prozessen gemäß Anspruch 11.

Damit ist es möglich, einen vorliegenden, mit der Maschinenausstattung kombinierten Werkzeugaufbau an der Lebensmittelverarbeitungsmaschine zu erfassen und die dadurch möglichen Detailprozesse zu bestimmen, mittels welcher der Produktionsvorgang an der Lebensmittelverarbeitungsmaschine ablaufen kann. Andere grundsätzlich mittels der Maschinenausstattung ausführbaren Prozesse, die mit einem anderen Werkzeugteil, das anstelle des installierten Werkzeugteils einsetzbar ist, ausgeführt werden können, können auf einen nicht aktivierbaren Status gesetzt werden und sind damit nicht vom Bediener für den vorliegenden Maschinenaufbau auswählbar.

Eine vorteilhafte Variante sieht vor, dass die Steuereinrichtung aus Datenspeichern von an verschiedenen Arbeitsstationen der Lebensmittelverarbeitungsmaschine jeweils austauschbar installierten Werkzeugteilen die jeweiligen Werkzeugkennungen ausliest, jeweilige mit diesen Werkzeugteilen grundsätzlich durchführbare Prozesse, die für einen Betrieb der jeweiligen Werkzeugteile in Frage kommen, bestimmt, und ferner durch einen Vergleich dieser Prozesse mit auf Basis einer an den jeweiligen Arbeitsstationen der Lebensmittelverarbeitungsmaschine fest verbauten, daran für die jeweiligen Werkzeugteile eingesetzten Maschinenausstattung mittels der jeweiligen Arbeitsstationen grundsätzlich ausführbaren Prozessen jeweilige Schnittmengen an Detailprozessen bestimmt, anhand welcher die Werkzeugteile an den jeweiligen Arbeitsstationen mittels der daran verbauten Maschinenausstattung gesteuert werden können. Damit lassen sich für die jeweiligen Arbeitsstationen mit daran installierten, austauschbaren Werkzeugteilen die durch den Bediener auswählbaren Detailprozesse, die ihm beim Einstellen der Lebensmittelverarbeitungsmaschine zur Verfügung stehen, einschränken, wodurch dem Bediener der Einstellvorgang dieser Arbeitsstationen vereinfacht wird.

Die Erfindung wird anhand der folgenden Figuren genauer erläutert. Es zeigen:
- Figur 1: eine Lebensmittelverarbeitungsmaschine, die in Form einer Tiefziehverpackungsmaschine vorliegt,
- Figur 2: eine Lebensmittelverarbeitungsmaschine, die als Schalenverschließmaschine vorliegt,
- Figur 3: eine Lebensmittelverarbeitungsmaschine, die als Teigverarbeitungsmaschine vorliegt,
- Figur 4: eine Lebensmittelverarbeitungsmaschine, die in Form eines Etikettierers vorliegt,
- Figur 5: eine Lebensmittelverarbeitungsmaschine, die als Aufschneidemaschine vorliegt,
- Figur 6: eine Verpackungslinie, die mehrere Lebensmittelverarbeitungsmaschinen aufweist,
- Figur 7: eine Arbeitsstation einer Lebensmittelverarbeitungsmaschine mit mehreren Werkzeugteilen, und
- Figur 8: eine schematische Darstellung des erfindungsgemäßen Verfahrens zum Einschränken an einer Lebensmittelverarbeitungsmaschine von einem Bediener auswählbarer Prozesse.

Gleiche Komponenten sind in den Figuren durchgängig mit gleichen Bezugszeichen versehen.

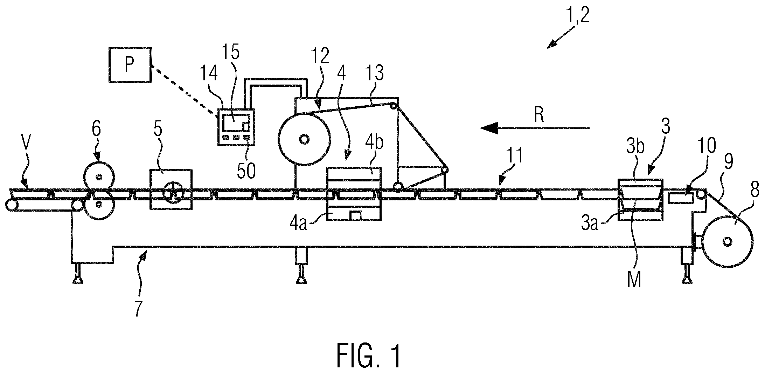

Figur 1 zeigt eine Lebensmittelverarbeitungsmaschine 1, die als eine intermittierend arbeitende Tiefziehverpackungsmaschine 2 konfiguriert ist. Diese Tiefziehverpackungsmaschine 2 weist eine Formstation 3, eine Siegelstation 4, eine Querschneideeinrichtung 5 und eine Längsschneideeinrichtung 6 auf, die in dieser Reihenfolge in einer Produktionsrichtung R an einem Maschinengestell 7 angeordnet sind. Eingangsseitig befindet sich an dem Maschinengestell 7 eine Zufuhrrolle 8, von der eine Unterfolie 9 abgezogen wird. Ferner weist die Tiefziehverpackungsmaschine 2 eine Transportkette 10 auf, die die Unterfolie 9 ergreift und diese pro Hauptarbeitstakt in Produktionsrichtung R weitertransportiert.

In der dargestellten Ausführungsform ist die Formstation 3 als eine Tiefziehstation ausgebildet, in der mittels eines Formwerkzeugunterteils 3a und eines Formwerkzeugoberteils 3b durch Tiefziehen, beispielsweise mittels Druckluft und/oder Vakuum, Mulden M in die Unterfolie 9 geformt werden. Dabei kann die Formstation 3 derart ausgebildet sein, dass in der Richtung senkrecht zur Produktionsrichtung R mehrere Mulden M nebeneinander gebildet werden. In Produktionsrichtung R hinter der Formstation 3 ist eine Einfüllstrecke beziehungsweise ein Einlegebereich 11 vorgesehen, entlang welcher die Verpackungsmulden M mit Produkten befüllt werden. Das Befüllen der Verpackungsmulden M kann von einem Bediener manuell oder durch eine Befülleinrichtung oder durch einen Picker maschinell durchgeführt werden.

Die Siegelstation 4 verfügt über ein Siegelwerkzeugunterteil 4a und ein darüber positioniertes Siegelwerkzeugoberteil 4b, die dazu ausgebildet sind, eine hermetisch verschließbare Kammer zu bilden, in der die Atmosphäre in den Verpackungsmulden M vor dem Versiegeln mit einer von einer Folienaufnahme 12 abgegebenen Oberfolie 13 zum Beispiel evakuiert und/oder durch Gasspülen mit einem Austauschgas oder mit einem Gasgemisch ersetzt werden kann.

Die Querschneideeinrichtung 5 kann als Stanze ausgebildet sein, die die Unterfolie 9 und die Oberfolie 13 in einer Richtung quer zur Produktionsrichtung R zwischen benachbarten Verpackungsmulden M durchtrennt. Dabei arbeitet die Querschneideeinrichtung 5 derart, dass die Unterfolie 9 nicht über die gesamte Breite aufgetrennt wird, sondern zumindest in einem Randbereich nicht durchtrennt wird. Dies ermöglicht einen kontrollierten Weitertransport durch die Transportkette 10.

Die Längsschneideeinrichtung 6 kann als eine Messeranordnung ausgebildet sein, mit der die Unterfolie 9 und die Oberfolie 13 zwischen benachbarten Verpackungsmulden M und am seitlichen Rand der Unterfolie 9 in Produktionsrichtung R durchtrennt werden, sodass hinter der Längsschneideeinrichtung 6 einzelne Verpackungen V vorliegen.

Die Tiefziehverpackungsmaschine 2 verfügt ferner über eine Steuereinrichtung 14. Sie hat die Aufgabe, die in der Tiefziehverpackungsmaschine 2 ablaufenden Prozesse zu steuern und zu überwachen. Die Steuereinrichtung 14 weist eine Benutzeroberfläche 15 auf, die zum Einstellen von Prozessabläufen, insbesondere zum Auswählen von Prozessabläufen bei Inbetriebnahme der Tiefziehverpackungsmaschine 2, Visualisieren und/oder Beeinflussen der Prozessabläufe in der Tiefziehverpackungsmaschine 2 für beziehungsweise durch einen Bediener dient. Die Steuereinrichtung umfasst weiter eine Schnittstelle 50 für einen Datenspeicher, insbesondere für eine CF-Karte. Eine solche Schnittstelle kann auch an den im Folgenden beschriebenen Maschinen vorliegen.

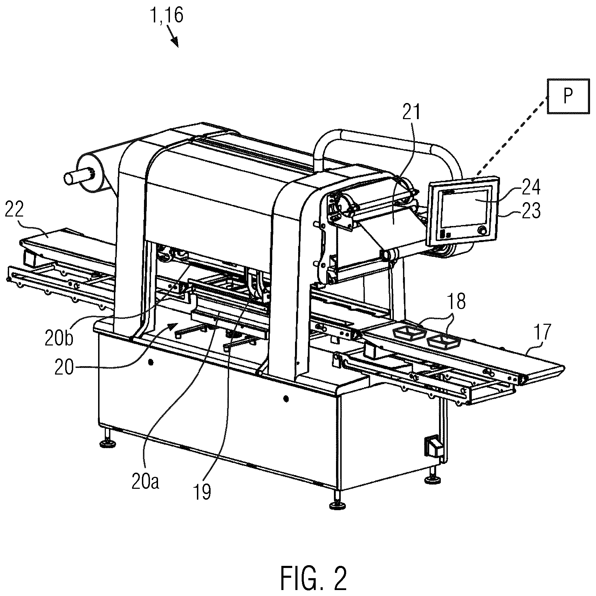

Figur 2 zeigt eine weitere Lebensmittelverarbeitungsmaschine 1, die als Schalenverschließmaschine 16 vorliegt. Eine derartige Schalenverschließmaschine 16 wird in Fachkreisen auch Traysealer genannt. Die Schalenverschließmaschine 16 weist ein Zuführband 17 auf, auf welchem vorgefertigte Schalenteile 18 transportiert werden. Ferner verfügt die Schalenverschließmaschine 16 über eine Greifereinrichtung 19. Mittels der Greifereinrichtung 19 können die auf den Zuführband 17 bereitgestellten Schalenteile 18 abgeholt und für einen Siegelprozess in eine Siegelstation 20 der Schalenverschließmaschine 16 übergeben werden. Darin aufgenommene Schalenteile 18 werden mit einer durch die Siegelstation 20 geführten Oberfolie 21 versiegelt. Die versiegelten Schalenteile 18 werden nach dem Siegelprozess mittels der Greifereinrichtung 19 aufgenommen und an ein Abführband 22 übergeben.

Für den Siegelprozess weist die Siegelstation 20 ein Siegelwerkzeugunterteil 20a und ein Siegelwerkzeugoberteil 20b auf, die sich aus der in Figur 2 gezeigten geöffneten Stellung für den Prozess zusammenführen lassen.

Die Schalenverschließmaschine 16 verfügt über eine Steuereinrichtung 23, die dazu konfiguriert ist, die in der Schalenverschließmaschine 16 ablaufenden Prozesse zu steuern und zu überwachen. Die Steuereinrichtung 23 verfügt über eine Benutzeroberfläche 24, die dazu ausgebildet ist, die Prozessabläufe an der Schalenverschließmaschine 16 einzustellen, insbesondere diese bei Inbetriebnahme der Schalenverschließmaschine 16 auszuwählen, zu visualisieren und/oder zu beeinflussen.

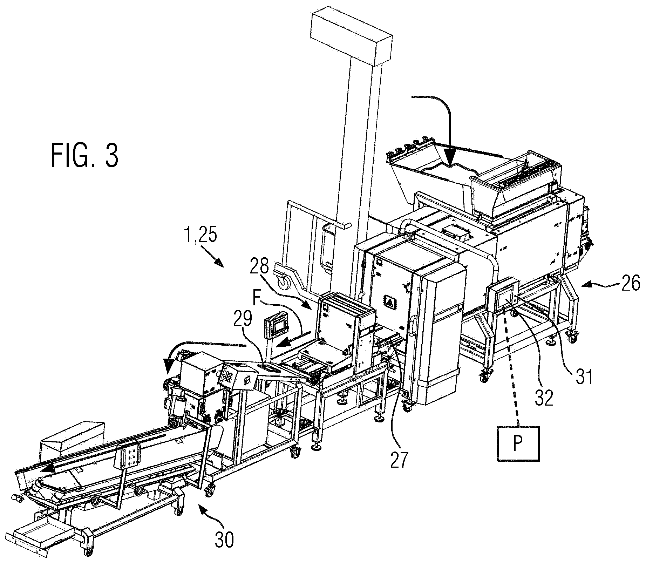

Figur 3 zeigt eine Lebensmittelverarbeitungsmaschine 1 als Teigverarbeitungsmaschine 25 in einer schematischen, perspektivischen Ansicht. Die Teigverarbeitungsmaschine 25 kann beispielsweise zum Herstellen von Brot konfiguriert sein. Sie weist einen Teigbanderzeuger 26 zum Herstellen eines Teigbands 27 sowie eine Teigbandschneidvorrichtung 28 auf, die dazu konfiguriert ist, eine Teigmasse 29, vorzugsweise quer zum Produktionspfad F von dem Teigband 27 abzutrennen.

Des Weiteren kann die Teigverarbeitungsmaschine 25 eine Teigverarbeitungsvorrichtung 30 umfassen. Die Teigverarbeitungsvorrichtung 30 ist dazu konfiguriert, aus der Teigmasse 29 geformte Teigwaren herzustellen.

Die Teigverarbeitungsmaschine 25 weist eine Steuereinrichtung 31 mit einer Benutzeroberfläche 32 auf, die dazu ausgebildet ist, die Prozessabläufe an der Teigverarbeitungsmaschine 25 einzustellen, insbesondere diese bei Inbetriebnahme der Teigverarbeitungsmaschine 25 auszuwählen, zu visualisieren und/oder zu beeinflussen.

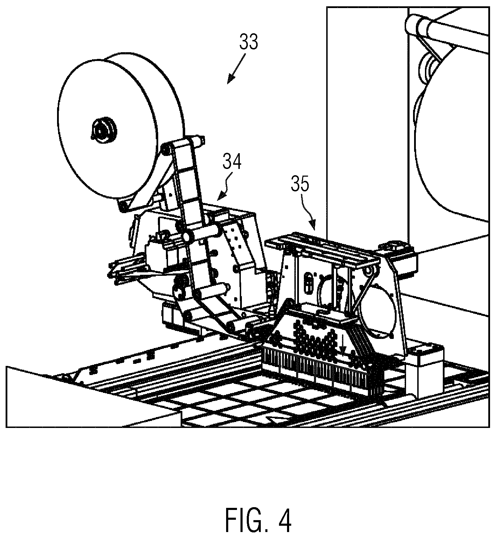

Figur 4 zeigt einen Etikettierer 33, der beispielsweise an einer Tiefziehverpackungsmaschine 2 gemäß Figur 1 in Produktionsrichtung R hinter der Siegelstation 4 einsetzbar ist, um an den versiegelten Verpackungen ein Etikett anzubringen. Der Etikettierer 33 weist einen Etikettenspender 34 und eine Schieberbaugruppe 35 zum Anbringen der Etiketten auf. Ein Betrieb des in Figur 4 gezeigten Etikettierers 33 kann mittels der Steuereinrichtung 14 der Tiefziehverpackungsmaschine 2 gesteuert werden.

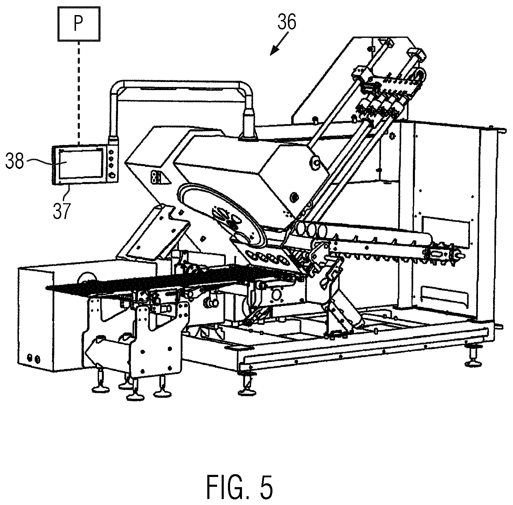

Figur 5 zeigt eine Aufschneideeinrichtung 36 zum Aufschneiden eines Lebensmittelprodukts in Scheiben. Die Aufschneideeinrichtung 36 weist eine Steuereinrichtung 37 auf, mittels welcher sich die an der Aufschneidemaschine 36 ablaufenden Prozesse steuern und überwachen lassen. Dafür weist die Steuereinrichtung 37 eine Benutzeroberfläche 38 für einen Bediener auf, anhand welcher der Bediener Prozessabläufe einstellen bzw. auswählen, insbesondere visualisieren und/oder beeinflussen kann.

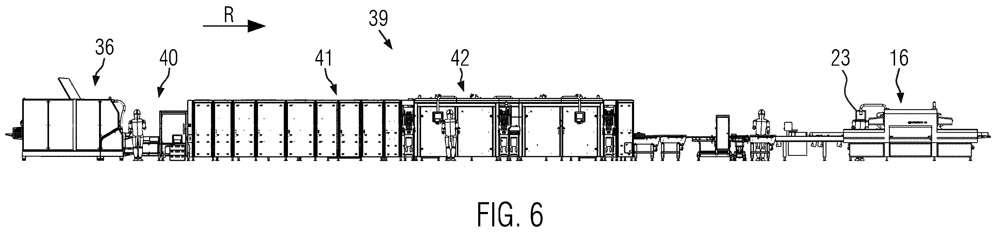

Figur 6 zeigt eine Verpackungslinie 39. Die Verpackungslinie 39 umfasst eine Aufschneidemaschine 36, wie sie in Figur 5 gezeigt ist. In Produktionsrichtung R hinter der Aufschneidemaschine 36 ist eine Wägemaschine 40 zum Wiegen der geschnittenen Produkte positioniert. Weiter stromabwärts der Wägemaschine 40 sind mehrere Beladestationen 41, 42 angeordnet, die dazu ausgebildet sind, die geschnittenen Produkte in bereitgestellte Schalenteile einzulegen. Die mit Produkten befüllten Schalenteile werden zu einer am Ende der Verpackungslinie 39 angeordneten Schalenverschließmaschine 16, wie sie beispielhaft in Figur 2 gezeigt ist, transportiert, die versiegelte Verpackungen herstellt.

Die Verpackungslinie 39 könnte alternativ zur in Figur 6 gezeigten Anordnung stromabwärts der Aufschneidemaschine 36 eine Tiefziehverpackungsmaschine 1, wie sie in Figur 1 beispielhaft gezeigt ist, aufweisen, entlang welcher die geschnittenen Produkte in anhand der Formstation 3 hergestellte Mulden M eingelegt und verpackt werden.

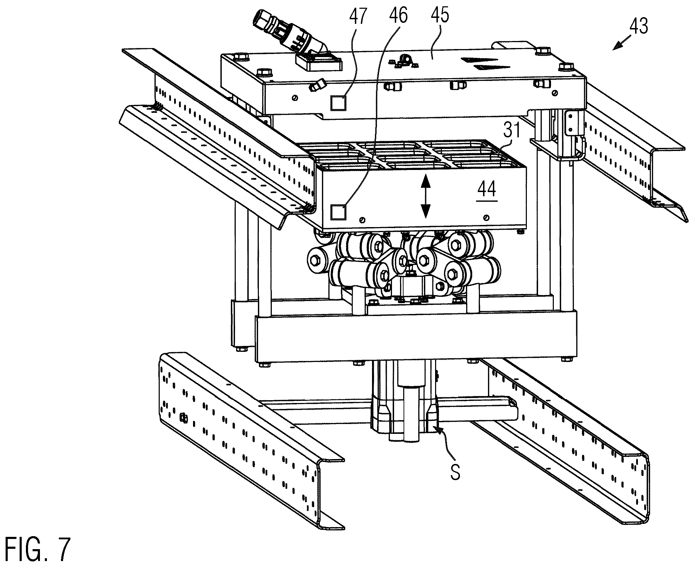

Figur 7 zeigt eine Arbeitsstation 43 mit einem mittels eines Antriebs S, der insbesondere als Servomotor vorliegt, höhenverstellbar gelagerten Werkzeugunterteil 44 und einem darüber positionierten Werkzeugoberteil 45. Die in Figur 7 gezeigte Arbeitsstation 43 kann beispielsweise als Siegelstation 4 der in Figur 1 gezeigten Tiefziehverpackungsmaschine 2 oder als Siegelstation 20 der in Figur 2 gezeigten Schalenverschließmaschine 16 vorliegen.

Figur 7 zeigt, dass das Werkzeugunterteil 44 beziehungsweise das Siegelwerkzeugunterteil und das Werkzeugoberteil 45 beziehungsweise das Siegelwerkzeugoberteil jeweils einen Datenspeicher 46, 47 aufweisen. Die jeweiligen Datenspeicher 46, 47 speichern mindestens eine Werkzeugkennung zur Identifizierung der jeweiligen Werkzeugteile, sind insbesondere als RFID-Datenspeicher ausgebildet.

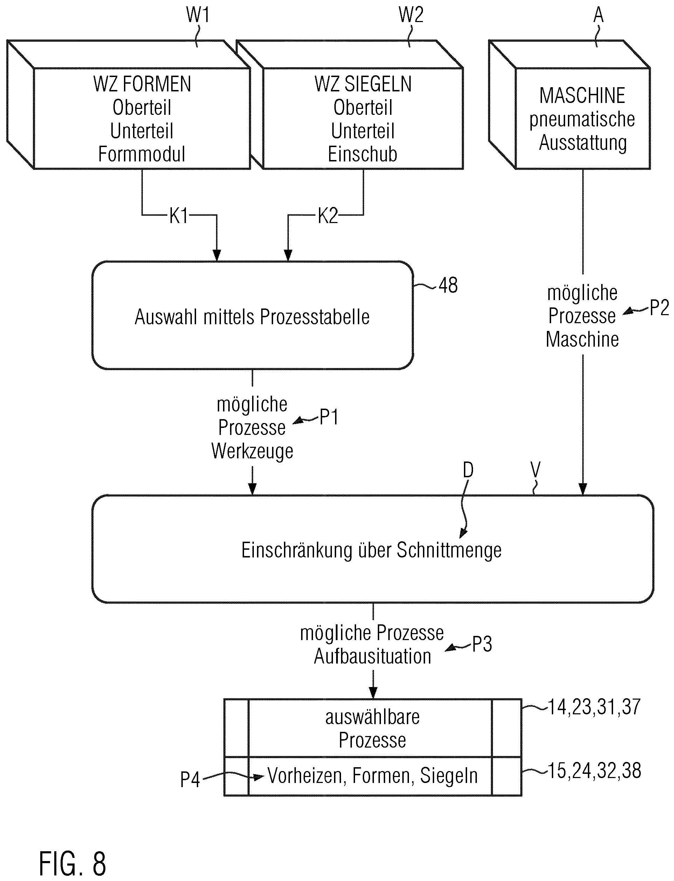

Figur 8 zeigt in schematischer Darstellung ein Verfahren P, welches sich mit sämtlichen zuvor in den Figuren 1 bis 6 gezeigten Steuereinrichtungen 14, 23, 31, 37 durchführen lässt.

Das Steuerungsverfahren P dient zum Einschränken von durch einen Bediener an einer der zuvor beschriebenen Lebensmittelverarbeitungsmaschinen 1 aktivierbaren Prozesse, beispielsweise der zum Vorheizen, Formen und/oder Siegeln eines Folienmaterials auswählbaren Prozesse. Zunächst werden aus mindestens zwei an der Lebensmittelverarbeitungsmaschine 1 installierten Werkzeugteilen W1, W2, diese identifizierenden Werkzeugkennungen K1, K2 anhand einer mit den Werkzeugteilen W1, W2 funktional verbundenen Steuereinrichtung 14, 23, 31, 37 ausgelesen. Bei den identifizierten Werkzeugteilen W1, W2 könnte es sich beispielsweise um das Siegelwerkzeugunterteil 44 und das Siegelwerkzeugunterteil 45 aus Figur 7 handeln.

Auf Basis einer Kombination der aus den beiden Werkzeugteilen W1, W2 ausgelesenen Werkzeugkennungen K1, K2 werden von mit diesen Werkzeugteilen W1, W2, insbesondere gemeinsam von diesen, durchführbare Prozesse P1 bestimmt, die für einen Betrieb der Lebensmittelverarbeitungsmaschine 1 in Frage kommen. Die jeweiligen Steuereinrichtungen 14, 23, 31, 37 können die durchführbaren Prozesse P1 unter Verwendung einer Prozesstabelle 48 herleiten, die beispielsweise anhand einer mit der jeweiligen Steuereinrichtung 14, 23, 31, 37 verbundenen CF-Karte vorgehalten wird.

Weiter zeigt Figur 8, dass die Steuereinrichtungen 14, 23, 31, 37 dazu konfiguriert sind, die angesichts der grundsätzlich mittels der Lebensmittelverarbeitungsmaschine 1 anhand der daran vorliegenden Maschinenausstattung A ausführbaren Prozesse P2 zu bestimmen.

Weiter zeigt Figur 8, dass die jeweiligen Steuereinrichtungen 14, 23, 31, 37 einen Vergleich V der mit den Werkzeugteilen W1, W2 durchführbaren Prozesse P1 mit den auf Basis der in der Lebensmittelverarbeitungsmaschine 1 fest verbauten, für die Werkzeugteile W1, W2 eingesetzten Maschinenausstattung A grundsätzlich ausführbaren Prozesse P2 durchzuführen, womit sich für die vorliegende Maschinenkonfiguration, sprich für den Typen der vorliegenden Lebensmittelverarbeitungsmaschine 1 sowie die daran eingesetzten Werkzeugteile W1, W2 die maximal möglichen Prozesse P3 bestimmen lassen, die als mittels der Steuereinrichtungen 14, 23, 31, 37 für den Betrieb der Lebensmittelverarbeitungsmaschine 1 bestimmbaren Detailprozesse D vorliegen.

Schließlich zeigt Figur 8, dass mittels der jeweiligen Benutzeroberflächen 15, 24, 32, 38 den Detailprozessen D übergeordnete Basisprozesse P4 dem Bediener zur Auswahl zur Verfügung stehen, wobei bereits durch deren Auswahl durch den Bediener und in Abhängigkeit einer der Steuereinrichtung 14, 23, 31, 37 vorgehaltenen Priorisierungsreihenfolge der in der Schnittmenge an Detailprozessen D enthaltenen Prozesse P3 die Lebensmittelverarbeitungsmaschine 1 automatisch einstellbar ist.

Die Erfindung bietet eine hervorragende Einstellhilfe für einen Bediener, um eine Lebensmittelverarbeitungsmaschine 1 angesichts eines kombinierten Einsatzes mindestens eines daran austauschbar installierten Werkzeugteils W1, W2 mit der dafür eingesetzten, fest installierten Maschinenausstattung A innerhalb kurzer Zeit für einen gewünschten Betrieb einzustellen. Die Erfindung bietet insbesondere für Lebensmittelverarbeitungsmaschinen 1, an welchen unterschiedliche Werkzeugaufbauten kombinierbar und installierbar sind, ein erhöhtes Potential zum Minimieren von Umrüstzeiten, wodurch an solchen Lebensmittelverarbeitungsmaschinen 1 die Produktivität gesteigert werden kann.

## Patentansprüche

1. Lebensmittelverarbeitungsmaschine (1), die insbesondere in Form einer Verpackungsmaschine zum Herstellen von Verpackungen (V) aus einem Verpackungsmaterial konfiguriert ist, wobei die Lebensmittelverarbeitungsmaschine (1) mehrere Werkzeugteile (W1, W2), die austauschbar sind und die jeweils mindestens einen elektronischen Datenspeicher (46, 47) umfassen, in welchen eine Werkzeugkennung (K1, K2) zur Identifizierung der jeweiligen Werkzeugteile (W1, W2) gespeichert ist, sowie eine Steuereinrichtung (14, 23, 31, 37) aufweist, die mit den jeweiligen Datenspeichern (46, 47) zum Auslesen der darin gespeicherten Werkzeugkennungen (K1, K2) verbunden ist,
**dadurch gekennzeichnet, dass** die Steuereinrichtung (14, 23, 31, 37) dazu konfiguriert ist,
auf Basis mindestens einer von ihr aus dem Datenspeicher (46, 47) eines an der Lebensmittelverarbeitungsmaschine (1) installierten, austauschbaren Werkzeugteils (W1, W2) ausgelesenen Werkzeugkennung (K1, K2) , mit diesem Werkzeugteil (W1, W2) grundsätzlich durchführbare Prozesse (P1), die für einen Betrieb des Werkzeugteils (W1, W2) in Frage kommen, zu bestimmen,
durch einen Vergleich (V) dieser Prozesse (P1) mit auf Basis einer in der Lebensmittelverarbeitungsmaschine (1) fest verbauten, für das Werkzeugteil (W1, W2) eingesetzten Maschinenausstattung (A) mittels der Lebensmittelverarbeitungsmaschine (1) grundsätzlich ausführbaren Prozessen (P2) eine Schnittmenge an Detailprozessen (D) zu bestimmen, anhand welcher das Werkzeugteil (W1, W2) anhand der dafür vorgesehenen Maschinenausstattung (A) steuerbar ist, und
die hinsichtlich des Werkzeugteils (W1, W2) und hinsichtlich der dafür vorliegenden Maschinenausstattung (A) resultierende Schnittmenge an Detailprozessen (D) als durch einen Bediener an der Steuereinrichtung (14, 23, 31, 37) an einer daran als Display ausgebildeten Eingabeeinheit auswählbare Prozesse für den Betrieb der Lebensmittelverarbeitungsmaschine (1) bereitzuhalten.

2. Lebensmittelverarbeitungsmaschine nach Anspruch 1, **dadurch gekennzeichnet, dass** die Maschinenausstattung (A) durch mindestens einen pneumatischen, elektrischen und/oder elektromagnetischen Antrieb (S) vorgegeben ist.

3. Lebensmittelverarbeitungsmaschine nach einem der vorangehenden Ansprüche, **dadurch gekennzeichnet, dass** die Lebensmittelverarbeitungsmaschine (1) mehrere in Produktionsrichtung (R) hintereinander angeordnete Arbeitsstationen (43) aufweist, wobei die Werkzeugteile (W1, W2) an derselben Arbeitsstation (43) oder an verschiedenen Arbeitsstationen (43) installiert sind.

4. Lebensmittelverarbeitungsmaschine nach Anspruch 3, **dadurch gekennzeichnet, dass** die Steuereinrichtung (14, 23, 31, 37) dazu konfiguriert ist, auf Basis mehrerer von ihr aus den jeweiligen Datenspeichern (46, 47) der an den verschiedenen Arbeitsstationen (43) der Lebensmittelverarbeitungsmaschine (1) installierten, austauschbaren Werkzeugteile (W1, W2) ausgelesenen Werkzeugkennungen (K1, K2), jeweilige mit diesen Werkzeugteilen (W1, W2) grundsätzlich durchführbare Prozesse (P1), die für einen Betrieb der jeweiligen Werkzeugteile (W1, W2) in Frage kommen, zu bestimmen, und ferner durch einen Vergleich (V) dieser Prozesse (P1) mit auf Basis einer an den jeweiligen Arbeitsstationen (43) der Lebensmittelverarbeitungsmaschine (1) fest verbauten, daran für die jeweiligen Werkzeugteile (W1, W2) eingesetzten Maschinenausstattung (A) mittels der jeweiligen Arbeitsstationen (43) grundsätzlich ausführbaren Prozessen (P2) jeweilige Schnittmengen an Detailprozessen (D) zu bestimmen, anhand welcher die Werkzeugteile (W1, W2) anhand der jeweiligen an den Arbeitsstationen (43) verbauten Maschinenausstattung steuerbar sind.

5. Lebensmittelverarbeitungsmaschine nach einem der vorangehenden Ansprüche, **dadurch gekennzeichnet, dass** die Werkzeugteile (W1, W2) durch ein Formwerkzeugoberteil (3b) für einen Tiefziehprozess, durch ein Formwerkzeugunterteil (3a) für einen Tiefziehprozess, durch ein Siegelwerkzeugoberteil (4b, 45) für einen Siegelprozess und/oder durch ein Siegelwerkzeugunterteil (4a, 44) für einen Siegelprozess gebildet sind.

6. Lebensmittelverarbeitungsmaschine nach einem der vorangehenden Ansprüche, **dadurch gekennzeichnet, dass** die Lebensmittelverarbeitungsmaschine (1) eine Benutzeroberfläche (15, 24, 32, 38) für einen Bediener aufweist, anhand derer den Detailprozessen (D) übergeordnete Basisprozesse (P4) dem Bediener anzeigbar und von ihm auswählbar sind, durch deren Auswahl und in Abhängigkeit einer der Steuereinrichtung (14, 23, 31, 37) vorgehaltenen Priorisierungsreihenfolge für die Detailprozesse die Detailprozesse (D) bestimmbar sind.

7. Lebensmittelverarbeitungsmaschine nach einem der vorangehenden Ansprüche, **dadurch gekennzeichnet, dass** die mit dem Datenspeicher (46, 47) versehenen Werkzeugteile (W1, W2) jeweils beheizbar ausgebildet sind.

8. Lebensmittelverarbeitungsmaschine nach einem der vorangehenden Ansprüche, **dadurch gekennzeichnet, dass** die Lebensmittelverarbeitungsmaschine (1) mindestens eine Schnittstelle (50) für einen Datenspeicher vorsieht, auf welchem eine editierbare Referenztabelle potentieller Kombinationen aus Werkzeugteilen (W1, W2) und dafür eingesetzter Maschinenausstattung (A) gespeichert ist.

9. Lebensmittelverarbeitungsmaschine nach einem der vorangehenden Ansprüche, **dadurch gekennzeichnet, dass** die Lebensmittelverarbeitungsmaschine (1) eine Tiefziehverpackungsmaschine (2), eine Schalenverschließmaschine (16), eine Schlauchbeutelmaschine, ein Etikettierer (33), eine Aufschneidemaschine (36) oder eine Teigverarbeitungsmaschine (25) ist.

10. Verpackungslinie (39), die in Produktionsrichtung (R) mindestens eine Lebensmittelverarbeitungsmaschine (1) gemäß einem der vorangehenden Ansprüche aufweist.

11. Verfahren zum Einschränken von durch einen Bediener an einer Lebensmittelverarbeitungsmaschine (1) aktivierbaren Prozessen, umfassend die folgenden Schritte:
• Auslesen mindestens einer Werkzeugkennung (K1, K2) aus einem Datenspeicher (46, 47) eines an der Lebensmittelverarbeitungsmaschine (1) austauschbar installierten Werkzeugteils (W1, W2) anhand einer mit dem Datenspeicher (46, 47) funktional verbundenen Steuereinrichtung (14, 23, 31, 37) der Lebensmittelverarbeitungsmaschine (1),
• Bestimmen anhand der Steuereinrichtung (14, 23, 31, 37) auf Basis der aus dem Datenspeicher (46, 47) des Werkzeugteils (W1, W2) ausgelesenen Werkzeugkennung (K1, K2) von mit diesem Werkzeugteil (W1, W2) grundsätzlich durchführbaren Prozessen (P1), die für einen Betrieb des Werkzeugteils (W1, W2) in Frage kommen,
• Bestimmen anhand der Steuereinrichtung (14, 23, 31, 37) durch einen von ihr durchgeführten Vergleich (V) der mit dem Werkzeugteil (W1, W2) grundsätzlich durchführbaren Prozesse (P1) mit auf Basis einer in der Lebensmittelverarbeitungsmaschine (1) fest verbauten, für das Werkzeugteil (W1, W2) eingesetzten Maschinenausstattung (A) mittels der Lebensmittelverarbeitungsmaschine (1) grundsätzlich ausführbaren Prozessen (P2) einer Schnittmenge an Detailprozessen (D), mittels welcher der Betrieb des Werkzeugteils (W1, W2) anhand der dafür vorgesehenen Maschinenausstattung (A) steuerbar ist, und
Bereithalten, durch die Steuereinrichtung (14, 23, 31, 37), der hinsichtlich des Werkzeugteils (W1, W2) und hinsichtlich der dafür vorliegenden Maschinenausstattung (A) resultierenden Schnittmenge an Detailprozessen (D) als durch den Bediener an der Steuereinrichtung (14, 23, 31, 37) an einer daran als Display ausgebildeten Eingabeeinheit auswählbare Prozesse für den Betrieb der Lebensmittelverarbeitungsmaschine.

12. Verfahren nach Anspruch 11, **dadurch gekennzeichnet, dass** die Steuereinrichtung (14, 23, 31, 37) aus Datenspeichern (46, 47) von an verschiedenen Arbeitsstationen (43) der Lebensmittelverarbeitungsmaschine (1) jeweils austauschbar installierten Werkzeugteilen (W1, W2) die jeweiligen Werkzeugkennungen (K1, K2) ausliest, jeweilige mit diesen Werkzeugteilen (W1, W2) grundsätzlich durchführbare Prozesse (P1), die für einen Betrieb der jeweiligen Werkzeugteile (W1, W2) in Frage kommen, bestimmt, und ferner durch einen Vergleich (V) dieser Prozesse (P1) mit auf Basis einer an den jeweiligen Arbeitsstationen (43) der Lebensmittelverarbeitungsmaschine (1) fest verbauten, daran für die jeweiligen Werkzeugteile (W1, W2) eingesetzten Maschinenausstattung (A) mittels der jeweiligen Arbeitsstationen (43) grundsätzlich ausführbaren Prozessen (P2) jeweilige Schnittmengen an Detailprozessen (D) bestimmt, anhand welcher die Werkzeugteile (W1, W2) an den jeweiligen Arbeitsstationen (43) mittels der daran verbauten Maschinenausstattung (A) gesteuert werden können.

## Claims

1. Food processing machine (1) which is in particular configured in the form of a packaging machine for manufacturing packages (V) from a packaging material, wherein the food processing machine (1) comprises a plurality of tool parts (W1, W2) which are exchangeable and which comprise each at least one electronic data storage (46, 47), in which a tool identification (K1, K2) is stored for identifying the respective tool parts (W1, W2), as well as a controlling system (14, 23, 31, 37) which is connected with the respective data storages (46, 47) for reading the tool identifications (K1, K2) stored therein, **characterized in that** the controlling system (14, 23, 31, 37) is configured to determine, on the basis of at least one tool identification (K1, K2) read from the data storage (46, 47) of an exchangeable tool part (W1, W2) installed at the food processing machine (1), processes (P1) basically implementable with this tool part (W1, W2) which are possible for an operation of the tool part (W1, W2), and furthermore to determine an intersection of detailed processes (D) by a comparison (V) of these processes (P1) with processes (P2) basically performable by means of the food processing machine (1) on the basis of machine equipment (A) employed for the tool part (W1, W2) and firmly installed in the food processing machine (1), by means of which the tool part (W1, W2) can be controlled by means of the machine equipment (A) provided for it, and to provide the intersection of detailed processes (D) resulting in view of the tool part (W1, W2) and in view of the machine equipment (A) present for it as processes for the operation of the food processing machine (1) selectable by an operator at the controlling system (14, 23, 31, 37) at an input unit formed thereat as a display.

2. Food processing machine according to claim 1, **characterized in that** the machine equipment (A) is predetermined by at least one pneumatic, electric and/or electromagnetic drive (S).

3. Food processing machine according to one of the preceding claims, **characterized in that** the food processing machine (1) comprises a plurality of workstations (43) arranged one behind the other in the production direction (R), wherein the tool parts (W1, W2) are installed at the same workstation (43) or at different workstations (43).

4. Food processing machine according to claim 3, **characterized in that** the controlling system (14, 23, 31, 37) is configured to determine, on the basis of a plurality of tool identifications (K1, K2) read by it from the respective data storages (46, 47) of the exchangeable tool parts (W1, W2) installed at the various workstations (43) of the food processing machine (1), respective processes (P1) basically implementable with these tool parts (W1, W2) which are possible for an operation of the respective tool parts (W1, W2), and furthermore to determine respective intersections of detailed processes (D) by a comparison (V) of these processes (P1) with processes (P2) basically performable by means of the respective workstations (43) on the basis of machine equipment (A) employed for the respective tool parts (W1, W2) and firmly installed at the respective workstations (43) of the food processing machine (1), by means of which the tool parts (W1, W2) can be controlled with the respective machine equipment (A) installed at the workstations (43).

5. Food processing machine according to one of the preceding claims, **characterized in that** the tool parts (W1, W2) are formed by an upper die part (3b) for a deep-drawing process, by a lower die part (3a) for a deep-drawing process, by an upper sealing tool part (4b, 45) for a sealing process, and/or by a lower sealing tool part (4a, 44) for a sealing process.

6. Food processing machine according to one of the preceding claims, **characterized in that** the food processing machine (1) comprises a user interface (15, 24, 32, 38) for an operator by means of which basic processes (P4) of a higher level than the detailed processes (D) can be displayed to and selected by the operator, by the selection of which and depending on a prioritization sequence for the detailed processes made available for the controlling system (14, 23, 31, 37), the detailed processes (D) can be determined.

7. Food processing machine according to one of the preceding claims, **characterized in that** the tool parts (W1, W2) provided with the data storage (46, 47) are each designed to be heatable.

8. Food processing machine according to one of the preceding claims, **characterized in that** the food processing machine (1) provides at least one interface (50) for a data storage in which an editable reference table of potential combinations of tool parts (W1, W2) and machine equipment (A) employed for them is stored.

9. Food processing machine according to one of the preceding claims, **characterized in that** the food processing machine (1) is a deep-drawing packaging machine (2), a tray sealing machine (16), a bag forming, filling, and sealing machine, a labeling machine (33), a slicing machine (36), or a dough processing machine (25).

10. Packaging line (39) which comprises, in the production direction (R), at least one food processing machine (1) according to one of the preceding claims.

11. Method for restricting processes activatable at a food processing machine (1) by an operator, comprising the following steps:
• reading at least one tool identification (K1, K2) from a data storage (46, 47) of a tool part (W1, W2) installed at the food processing machine (1) in an exchangeable manner by means of a controlling system (14, 23, 31, 37) of the food processing machine (1) functionally connected with the data storage (46, 47),
• determining, by means of the controlling system (14, 23, 31, 37), on the basis of the tool identification (K1, K2) read from the data storage (46, 47) of the tool part (W1, W2), processes (P1) basically implementable with this tool part (W1, W2) which are possible for an operation of the tool part (W1, W2),
• determining, by means of the controlling system (14, 23, 31, 37), an intersection of detailed processes (D) by a comparison (V), carried out by it, of the processes (P1) basically implementable with the tool part (W1, W2) with processes (P2) basically performable by means of the food processing machine (1) on the basis of machine equipment (A) employed for the tool part (W1, W2) and firmly installed in the food processing machine (1), by means of which the operation of the tool part (W1, W2) can be controlled based on the machine equipment (A) provided for it, and
• providing the intersection of detailed processes (D) resulting in view of the tool part (W1, W2) and in view of the machine equipment (A) present for it as processes for the operation of the food processing machine (1) selectable by an operator at the controlling system (14, 23, 31, 37) at an input unit formed thereat as a display.

12. Method according to claim 11, **characterized in that** the controlling system (14, 23, 31, 37) reads the respective tool identifications (K1, K2) from data storages (46, 47) of tool parts (W1, W2) each installed at different workstations (43) of the food processing machine (1) in an exchangeable manner, determines respective processes (P1) basically implementable with these tool parts (W1, W2) which are possible for an operation of the respective tool parts (W1, W2), and furthermore determines respective intersections of detailed processes (D) by a comparison (V) of these processes (P1) with processes (P2) basically performable by means of the respective workstations (43) on the basis of machine equipment (A) employed for the respective tool parts (W1, W2) and firmly installed at the respective workstations (43) of the food processing machine (1), by which the tool parts (W1, W2) can be controlled at the respective workstations (43) by means of the machine equipment (A) installed thereat.

## Revendications

1. Machine de traitement d'aliments (1), configurée en particulier sous la forme d'une machine d'emballage permettant de produire des emballages (V) à partir d'un matériau d'emballage, dans laquelle la machine de traitement d'aliments (1) présente plusieurs parties outil (W1, W2) qui sont interchangeables et qui comprennent respectivement au moins une mémoire de données électronique (46, 47) au sein de laquelle un identifiant d'outil (K1, K2) permettant d'identifier les parties outil (W1, W2) respectives est stocké, ainsi qu'un dispositif de commande (14, 23, 31, 37) connecté aux mémoires de données (46, 47) respectives afin de lire les identifiants d'outil (K1, K2) qui y sont stockés,
**caractérisée en ce que** le dispositif de commande (14, 23, 31, 37) est configuré pour déterminer, en se basant sur au moins un identifiant d'outil (K1, K2) lu par ledit dispositif de commande dans la mémoire de données (46, 47) d'une partie outil (W1, W2) interchangeable installée sur la machine de traitement d'aliments (1), des procédés (P1) pouvant en principe être mis en œuvre par ladite partie outil (W1, W2) et impliqués dans le fonctionnement de la partie outil (W1, W2),
déterminer, grâce à une comparaison (V) entre lesdits procédés (P1) et des procédés (P2) pouvant en principe être mis en œuvre au moyen de la machine de traitement d'aliments (1) en se basant sur un équipement de machine (A) installé de manière fixe dans la machine de traitement d'aliments (1) et utilisé pour la partie outil (W1, W2), une concomitance de procédés détaillés (D) à l'aide desquels la partie outil (W1, W2) peut être commandée à l'aide de l'équipement de machine (A) prévu pour celle-ci, et
tenir à disposition, sous la forme de procédés permettant de faire fonctionner la machine de traitement d'aliments (1) et pouvant être sélectionnés par un opérateur sur le dispositif de commande (14, 23, 31, 37) sur une unité de saisie réalisée au niveau dudit dispositif de commande sous la forme d'un écran, la concomitance de procédés détaillés (D) résultante en ce qui concerne la partie outil (W1, W2) et en ce qui concerne l'équipement de machine (A) disponible pour celle-ci.

2. Machine de traitement d'aliments selon la revendication 1, **caractérisée en ce que** l'équipement de machine (A) est prédéfini grâce à au moins un entraînement pneumatique, électrique et/ou électromagnétique (S).

3. Machine de traitement d'aliments selon l'une quelconque des revendications précédentes, **caractérisée en ce que** la machine de traitement d'aliments (1) présente plusieurs postes de travail (43) agencés les uns derrière les autres dans la direction de production (R), dans laquelle les parties outil (W1, W2) sont installées sur le même poste de travail (43) ou sur des postes de travail (43) différents.

4. Machine de traitement d'aliments selon la revendication 3, **caractérisée en ce que** le dispositif de commande (14, 23, 31, 37) est configuré pour déterminer, en se basant sur plusieurs identifiants d'outil (K1, K2) lus par ledit dispositif de commande dans les mémoires de données (46, 47) respectives des parties outil (W1, W2) interchangeables installées aux différents postes de travail (43) de la machine de traitement d'aliments (1), des procédés (P1) respectifs pouvant en principe être mis en œuvre par lesdites parties outil (W1, W2) et impliqués dans le fonctionnement des parties outil (W1, W2) respectives, et déterminer en outre, grâce à une comparaison (V) entre lesdits procédés (P1) et des procédés (P2) pouvant en principe être mis en œuvre au moyen des postes de travail (43) respectifs en se basant sur un équipement de machine (A) installé de manière fixe au niveau des postes de travail (43) respectifs de la machine de traitement d'aliments (1) et utilisé pour les parties outil (W1, W2) respectives, des concomitances respectives de procédés détaillés (D) à l'aide desquels les parties outil (W1, W2) peuvent être commandées à l'aide de l'équipement de machine respectif installé au niveau des postes de travail (43).

5. Machine de traitement d'aliments selon l'une quelconque des revendications précédentes, **caractérisée en ce que** les parties outil (W1, W2) sont formées par une partie supérieure d'outil de formage (3b) destinée à un procédé d'emboutissage profond, par une partie inférieure d'outil de formage (3a) destinée à un procédé d'emboutissage profond, par une partie supérieure d'outil de scellage (4b, 45) destinée à un procédé de scellage et/ou par une partie inférieure d'outil de scellage (4a, 44) destinée à un procédé de scellage.

6. Machine de traitement d'aliments selon l'une quelconque des revendications précédentes, **caractérisée en ce que** la machine de traitement d'aliments (1) présente une surface utilisateur (15, 24, 32, 38) destinée à un opérateur, à l'aide de laquelle des procédés de base (P4) supérieurs aux procédés détaillés (D) peuvent être affichés pour l'utilisateur et sélectionnés par lui, les procédés détaillés (D) pouvant être déterminés du fait de leur sélection et en fonction d'un ordre de priorité des procédés détaillés fourni au dispositif de commande (14, 23, 31, 37).

7. Machine de traitement d'aliments selon l'une quelconque des revendications précédentes, **caractérisée en ce que** les parties outil (W1, W2) munies de la mémoire de données (46, 47) peuvent respectivement être chauffées.

8. Machine de traitement d'aliments selon l'une quelconque des revendications précédentes, **caractérisée en ce que** la machine de traitement d'aliments (1) prévoit au moins une interface (50) pour une mémoire de données sur laquelle est stockée une table de référence, modifiable, de combinaisons potentielles de parties outil (W1, W2) et d'équipement de machine (A) utilisé pour celles-ci.

9. Machine de traitement d'aliments selon l'une quelconque des revendications précédentes, **caractérisée en ce que** la machine de traitement d'aliments (1) est une machine d'emballage par emboutissage profond (2), une machine de scellage de barquettes (16), une ensacheuse tubulaire, une étiqueteuse (33), une machine de découpage (36) ou une machine de boulangerie (25).

10. Ligne d'emballage (39) qui présente au moins une machine de traitement d'aliments (1) selon l'une quelconque des revendications précédentes dans la direction de production (R).

11. Procédé de limitation de procédés pouvant être activés par un opérateur sur une machine de traitement d'aliments (1), comprenant les étapes ci-dessous consistant à :
• lire, à l'aide d'un dispositif de commande (14, 23, 31, 37) de la machine de traitement d'aliments (1) relié de manière fonctionnelle à la mémoire de données (46, 47), au moins un identifiant d'outil (K1, K2) à partir d'une mémoire de données (46, 47) d'une partie outil (W1, W2) installée de manière interchangeable sur la machine de traitement d'aliments (1),
• déterminer, à l'aide du dispositif de commande (14, 23, 31, 37) et en se basant sur l'identifiant d'outil (K1, K2) lu dans la mémoire de données (46, 47) de la partie outil (W1, W2), des procédés (P1) pouvant en principe être mis en œuvre par ladite partie outil (W1, W2) et impliqués dans le fonctionnement de la partie outil (W1, W2),
• déterminer, à l'aide du dispositif de commande (14, 23, 31, 37) et grâce à une comparaison (V) mise en œuvre par celui-ci entre les procédés (P1) pouvant en principe être mis en œuvre par la partie outil (W1, W2) et des procédés (P2) pouvant en principe être mis en œuvre au moyen de la machine de traitement d'aliments (1) en se basant sur un équipement de machine (A) installé de manière fixe dans la machine de traitement d'aliments (1) et utilisé pour la partie outil (W1, W2), une concomitance de procédés détaillés (D) au moyen desquels le fonctionnement de la partie outil (W1, W2) peut être commandé à l'aide de l'équipement de machine (A) prévu pour celle-ci, et
• tenir à disposition, grâce au dispositif de commande (14, 23, 31, 37) et sous la forme de procédés permettant de faire fonctionner la machine de traitement d'aliments et pouvant être sélectionnés par un opérateur sur le dispositif de commande (14, 23, 31, 37) sur une unité de saisie réalisée au niveau dudit dispositif de commande sous la forme d'un écran, la concomitance de procédés détaillés (D) résultante en ce qui concerne la partie outil (W1, W2) et en ce qui concerne l'équipement de machine (A) disponible pour celle-ci.

12. Procédé selon la revendication 11, **caractérisé en ce que** le dispositif de commande (14, 23, 31, 37) lit les identifiants d'outil (K1, K2) respectifs à partir de mémoires de données (46, 47) de parties outil (W1, W2) installées de manière interchangeable au niveau de différents postes de travail (43) de la machine de traitement d'aliments (1), détermine des procédés (P1) respectifs pouvant en principe être mis en œuvre par lesdites parties outil (W1, W2) et impliqués dans le fonctionnement des parties outil (W1, W2) respectives, et détermine en outre, grâce à une comparaison (V) entre lesdits procédés (P1) et des procédés (P2) pouvant en principe être mis en œuvre au moyen des postes de travail (43) respectifs en se basant sur un équipement de machine (A) installé de manière fixe au niveau des postes de travail (43) respectifs de la machine de traitement d'aliments (1) et utilisé pour les parties outil (W1, W2) respectives, des concomitances respectives de procédés détaillés (D) à l'aide desquels les parties outil (W1, W2) peuvent être commandées au niveau des postes de travail (43) respectifs au moyen de l'équipement de machine (A) installé au niveau de ceux-ci.
